# EUROPÄISCHE PATENTSCHRIFT

(11) **EP 1 334 817 B1**
(45) Veröffentlichungstag und Bekanntmachung des Hinweises auf die Patenterteilung: **08.06.2005**
(21) Anmeldenummer: 03000778.5
(22) Anmeldetag: 14.01.2003
(51) Int. Cl.: B29C 49/02, B29C 49/42, B29C 51/02, B29C 69/00, B29C 49/04

(54) **Verfahren zur Herstellung von schalenförmigen Formteilen oder Hohlkörpern aus thermoplastischem Kunststoff**
Method for manufacturing of shell shaped articles or hollow bodies from a thermoplastic material
Procédé pour fabriquer des objets creux ou en forme de coquille en matière plastique

(30) Priorität: 08.02.2002 DE 10205524
(43) Veröffentlichungstag der Anmeldung: 13.08.2003
(73) Patentinhaber: SIG Kautex GmbH & Co. KG, 53229 Bonn (DE)
(72) Erfinder: Pappert, Michael, Dipl.-Ing., 53783 Eitorf (DE); Jira, Alfred, 53639 Königswinter (DE); Hollweg, Andreas, Dipl.-Ing., 53773 Hennef (DE); Kummer, Wolfgang, 53721 Siegburg (DE); Klüsener, Peter, Dipl.-Ing., 53179 Bonn (DE)
(74) Vertreter: Lippert, Stachow, & Partner

(56) Entgegenhaltungen:
- EP-A- 1 110 697
- DE-A- 10 010 900
- US-A- 3 733 381
- PATENT ABSTRACTS OF JAPAN vol. 1997, no. 05, 30. Mai 1997 (1997-05-30) -& JP 09 001640 A (SEKISUI SEIKEI KOGYO KK), 7. Januar 1997 (1997-01-07)

## Beschreibung

Die Erfindung betrifft ein Verfahren zur Herstellung von schalenförmigen Formteilen oder Hohlkörpern aus thermoplastischem Kunststoff, umfassend die Herstellung eines wenigstens annähernd schlauchförmigen Vorformlings durch Extrusion von thermoplastischem Material auf eine bestimmte Länge und die axiale Aufteilung des Vorformlings zu wenigstens einer einlagigen Materialbahn, wobei die Materialbahn in einem Formwerkzeug in der ersten Hitze die Endform erhält.

Es gibt das Bestreben, schalenförmige Teile, die dann gegebenenfalls zu Hohlkörpern zusammengeschweißt werden, aus flachen Vorfabrikaten herzustellen. Verbreitet und bekannt ist das sogenannte Thermoformen oder auch das Tiefziehen. Diese Verfahren sind energetisch verhältnismäßig aufwendig, da diese in der "zweiten Wärme" bzw. "zweiten Hitze" arbeiten. Ein Verfahren der eingangs genannten Art, bei welchem die Umformung des Vorformlings in die Endform erfolgt, ist beispielsweise aus der EP 1 110 697 A2 bekannt.

Ein ebenfalls gattungsgemäßes Verfahren ist aus der WO 01/60592 A1 bekannt.

In der EP 1 110 697 A2 ist ein Verfahren zur Herstellung eines extrusionsblasgeformten Kraftstoffbehälters beschrieben, bei welchem zunächst in bekannter Art und Weise ein schlauchförmiger Vorformling extrudiert wird. Der Vorformling wird bei Austritt aus dem Extrusionskopf mittels Trennwerkzeugen der Länge nach aufgeschnitten und in zwei vorhangartige einlagige Materialbahnen zerteilt. Hierzu ist unterhalb des Extrusionskopfs eine Einrichtung zur Führung und Ausbreitung der Hälften des aufgetrennten Schlauchs vorgesehen. Diese etwa satteldachförmig angeordnete Führungseinrichtung ist jeweils mit Führungsrollen versehen, über die die noch plastischen Kunststoffbahnen herabgleiten. Unterhalb des Extrusionskopfs ist in bekannter Art und Weise das Formwerkzeug, bestehend aus zwei jeweils mit einer Kavität versehenen Formhälften angeordnet. Die Aufteilung des schlauchförmigen Vorformlings wird bei dem bekannten Verfahren dazu genutzt, in den Kraftstoffbehälter einzubringende Einbauten zwischen den Materialbahnen so anzuordnen, dass die Einbauten den Vorformling nicht vor Beginn des Blasformvorgangs berühren. Nachdem die Einbauten entsprechend plaziert worden sind, schließen sich in bekannter Art und Weise die Formhälften des Formwerkzeugs, wobei die Materialbahnen des Vorformlings an den Rändern der Form miteinander verschweißt und abgequetscht werden. Der Vorformling wird innerhalb der Kavität durch Blasluft aufgeweitet.

Die WO 01/60592 A1 betrifft ebenfalls ein Verfahren zur Herstellung eines Kraftstofftanks aus miteinander verschweißten Halbschalen. Die Halbschalen werden durch Extrusion eines schlauchförmigen Vorformlings erzielt, der nach Extrusion zu einer ebenen einlagigen Materialbahn ausgebreitet wird, welche wiederum in einer Form, bestehend aus Stempel und Kavität zu der fertigen Halbschale umgeformt wird.

Sowohl im Falle des Verfahrens der EP 1 110 697 A2 als auch im Falle des Verfahrens gemäß WO 01/60592 A1 ist es verhältnismäßig aufwendig, den aufgetrennten Schlauch zu einem möglichst planen, flachen Vorformling zu öffnen. Hierzu werden in beiden Fällen entsprechende Führungselemente, Rollen und Transporthilfen benötigt. Nach Ausbreitung des Vorformlings muss dieser von dem Formwerkzeug aufgenommen werden und von diesem oder gegebenenfalls von separat vorgesehenen Werkzeugen von dem nachfolgenden Strang getrennt werden. Hierzu sind ebenfalls entsprechende Hilfsmittel erforderlich.

Die Einrichtung zur Führung und Ausbreitung des Vorformlings wird insbesondere dann als hinderlich empfunden, wenn die Extrusionsvorrichtung in Betrieb genommen bzw. angefahren wird. Dazu kann es zunächst erforderlich sein, die Führungen von dem erhärteten Material zu befreien. Der Extrusionskopf und die Führungsvorrichtungen sind in der Regel ca. 5 m über dem Boden angeordnet, so dass Vorarbeiten zur Inbetriebnahme der Vorrichtung, die in der Regel von Hand durchzuführen sind, sich regelmäßig schwierig gestalten.

Aus der DE 100 10 900 A ist ein Verfahren zur Herstellung von schalenförmigen Formteilen aus thermoplastischem Kunststoff als sogenanntes kombiniertes Extrusions-Pressverfahren bekannt, bei welchem der Vorformling beim Ausstoßen aus einem Extrusionskopf in Vorhänge aufgeschnitten wird, die dann zwischen einem Kern und einer äußeren Formhälfte gepresst und in der gleichen Form verschweißt werden. Bei einer in der DE 100 10 900 A1 beschriebenen Verfahrensvariante ist vorgesehen, den schlauchförmigen Vorformling mittels eines beheizten Messers von der Blasdüse abzutrennen und mittels einer Tragevorrichtung in die Waagerechte zu legen und dann über den waagerecht liegenden, teilbaren Kern zu ziehen, um dann mit einer herabfahrenden Formaußenschale zu dem gewünschten Formteil gepresst zu werden. Als Tragevorrichtung wird in der DE 100 10 900 eine Austragshilfe in Form eines waagerechten schmalen wärmebeständigen Transportbandes vorgeschlagen, das synchron mit dem Schlauchausstoß läuft. Eine solche Austragshilfe ist konstruktiv verhältnismäßig aufwändig und erfordert vor allen Dingen eine räumlich feste Zuordnung vom Werkzeug zum Extrusionskopf. Der Erfindung liegt daher die Aufgabe zugrunde, ein Verfahren der eingangs genannten Art hinsichtlich Handhabbarkeit und Ausbreitung des Vorformlings zu verbessern.

Die Aufgabe wird gelöst mit den Merkmalen des Anspruchs 1.

Der Begriff "einlagige Materialbahn" im Sinne der Erfindung schließt ein mehrschichtiges Extrudat, welches beispielsweise durch Coextrusion erhalten wurde, nicht aus.

Die Vorgehensweise gemäß der Erfindung verbindet verschiedene Vorzüge miteinander. Beispielsweise sind aufwendige Führungen und Rollen oder dergleichen zur Ausbreitung und Fixierung der Materialbahn nicht mehr erforderlich, wodurch folglich etwaige Manipulationen unterhalb des Extrusionskopfs bei Inbetriebnahme der Extrusionsvorrichtung entfallen. Darüber hinaus ist es nicht mehr erforderlich, die Materialbahn durch die Bewegung des Formwerkzeugs, gegebenenfalls unter Zuhilfenahme an und für sich bekannter Trennvorrichtungen, von dem kontinuierlich extrudierten Strang abzulängen bzw. abzutrennen.

Erfindungsgemäß ist statt dessen vorgesehen, den Vorformling mittels eines Manipulators von dem Extrusionskopf abzunehmen.

Eine Anordnung der Formwerkzeuge unterhalb des Extrusionskopf ist bei einer solchen Vorgehensweise nicht mehr notwendigerweise erforderlich. Der von dem Manipulator abgenommene und zu einer Materialbahn ausgebreitete Vorformling kann mittels des Manipulators transportiert werden, so dass eine stationäre Anordnung der Formwerkzeuge räumlich entfernt von dem Extrusionskopf möglich ist.

Die Erfindung ist so zu verstehen, dass diese auch die Extrusion eines annähernd schlauchförmigen oder etwa U-förmigen Vorformlings umfasst, wobei sich die Erfindung die Verwendung von Extrusionsköpfen mit Ringspaltdüsen zunutze macht. Mit diesen lassen sich Extrudate mit variierender Wanddicke bezogen sowohl auf die Länge des Extrudats als auch auf dessen Umfang herstellen. Darüber hinaus hat die Verwendung von Extrusionsköpfen mit Ringspaltdüsen den Vorzug, das auf eine breite Vielfalt von handelsüblichen Extrusionsköpfen zurückgegriffen werden kann.

Je nach Eigenschaften des extrudierten Materials kommen verschiedene Möglichkeiten zur Ablängung des Vorformlings in Betracht. Beispielsweise kann der Vorformling mit einer hierfür vorgesehenen Trennvorrichtung unterhalb des Extrusionskopfs abgetrennt werden, beispielsweise mittels Messern, Scheren, Heißdraht oder dergleichen Vorrichtungen.

Gemäß einer bevorzugten Variante des Verfahrens nach der Erfindung ist vorgesehen, dass durch Nutzung der Wanddickensteuerung bei der Extrusion des Vorformlings in vorgegebenen Abständen Soll-Risslinien über den Umfang des Vorformlings erzeugt werden. So kann der auf eine vorgegebene Länge extrudierte Vorformling von dem Manipulator abgenommen und unter Aufbringung moderater Kräfte von dem kontinuierlich aus dem Extrusionskopf austretenden Materialstrang abgenommen werden.

Es kann vorgesehen sein, dass der Vorformling an wenigstens einer Stelle seines Umfangs mittels wenigstens eines unterhalb des Extrusionskopfes angeordneten Trennwerkzeugs axial aufgeteilt wird. Die Ausbreitung des Vorformlings zu einer einlagigen Materialbahn kann entlang nur einer einzigen Trennnaht erfolgen, so dass die Abwicklung bzw. Ausbreitung des Vorformlings über einen Umfang von 360 Grad in eine Ebene erfolgt. Ebenso ist eine axiale Aufteilung des Vorformlings, symmetrisch oder auch unsymmetrisch mittels mehr als zweier Trennnähte möglich. Entsprechend der Anzahl der erzeugten Materialbahnen muss der Manipulator mit einer entsprechenden Anzahl von Greifarmen oder Greifeinrichtungen versehen sein.

Alternativ zur Aufteilung des Vorformlings unterhalb des Extrusionskopfs mittels Trennwerkzeugs kann eine Aufteilung des Vorformlings innerhalb des Extrusionskopfes durch entsprechende Aufteilung des Materialstroms erfolgen.

Hierzu ist es zweckmäßig, wenn zwischen die innerhalb des Extrusionskopfs aufgeteilten Materialströme ein dünner Trennstreifen eines Trennmittels eingebracht wird, das sich nicht mit dem übrigen Extrudat verbindet, d. h. mit diesem verschmilzt oder verschweißt oder verklebt. Auf diese Art und Weise kann ein axial ein- oder mehrfach geteilter Vorformling extrudiert werden, dessen Ausbreitung ohne den Einsatz zusätzlicher Werkzeuge unterhalb des Extrusionskopfs erfolgen kann.

Eine bevorzugte Variante des Verfahrens gemäß der Erfindung zeichnet sich durch Coextrusion eines mehrschichtigen Vorformlings aus.

Unabhängig davon, ob mehrschichtig oder einschichtig extrudiert wird, kann der Vorformling über seine Länge und/oder seinen Umfang mit variierender Wanddicke extrudiert werden. Hierdurch lassen sich letztendlich Materialbahnen oder Materiallappen mit verhältnismäßig komplizierter Wanddickenverteilung ausbilden.

Die Erfindung wird nachstehend anhand eines mit Zeichnungen dargestellten Ausführungsbeispiels erläutert. Es zeigen:
- Figuren 1 bis 4: schematisch einen Extrusionsvorgang sowie das Anlegen eines Manipulators gemäß der Erfindung an den schlauchförmigen Vorformling,
- Figuren 5 bis 8: das Abnehmen der Materialbahnen vom Extrusionskopf und deren Ausbreitung mittels des Manipulators und
- Figuren 9 und 10: die Übergabe der Materialbahnen mittels des Manipulators an die Formwerkzeuge.

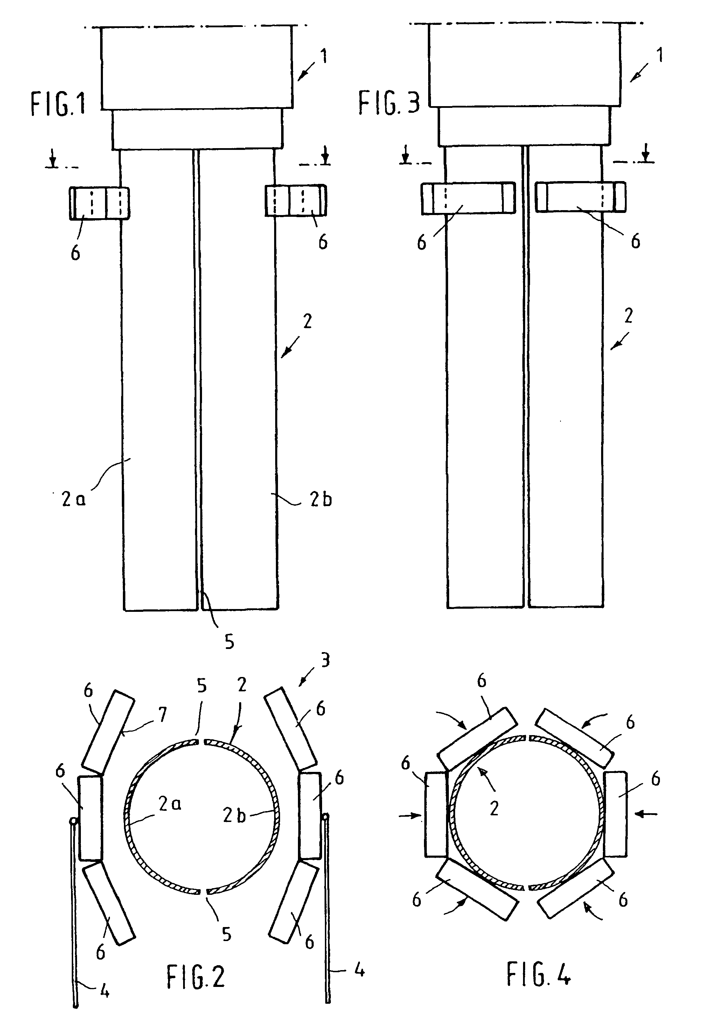

In Figur 1 ist schematisch ein mit 1 bezeichneter Extrusionskopf dargestellt, an dem hängend, in Schwerkraftrichtung, ein schlauchförmiger Vorformling 2 extrudiert wird. Dieser ist an zwei gegenüberliegenden Stellen jeweils mit einer axialen Trennfuge 5 versehen, die mittels nicht dargestellter Trennwerkzeuge unterhalb des Extrusionskopfs erzeugt worden sein kann. Im folgenden wird das Verfahren gemäß der Erfindung anhand eines Vorformlings 2 erläutert, der an zwei diametral gegenüberliegenden Stellen axial aufgeteilt wurde. Wie Eingangs bereits beschrieben, kann auch vorgesehen sein, den Vorformling nur mit einer Trennfuge 5 zu versehen und diesen entlang dieser einen Trennfuge auszubreiten. Alternativ kann vorgesehen sein, dass, wie vorstehend bereits beschrieben, die axiale Trennung des Vorformlings 2 innerhalb des Extrusionskopfs 1 erfolgt. Hierzu wird der Materialstrom des schmelzflüssigen Extrudats innerhalb des Extrusionskopfs 1 umfänglich aufgeteilt. Damit sich das Material beim Austritt aus dem Extrusionskopf 1 nicht wieder verbindet, ist es zweckmäßig, einen oder mehrere dünne Streifen eines Trennmittels zwischen die aufgeteilten Materialströme zu extrudieren. Als Trennmittel kommt beispielsweise ein thermoplastisches Material in Betracht, das nicht mit dem Material, aus welchem der Vorformling 2 vorwiegend besteht, verschmelzbar, verschweißbar oder verklebbar ist.

In dem in Figur 2 dargestellten Schnitt entlang der Linien II-II in Figur 1 sind zwei Greifarme 4 eines Manipulators 3 dargestellt, die jeweils eine der durch die Trennfugen 5 erzeugten Materialbahnen 2a, 2b des Vorformlings 2 umgeben. Der Manipulator 3 ist nachfolgend sehr stark vereinfacht dargestellt. Dieser besteht in den beschriebenen Ausführungsbeispielen aus zwei Greifarmen 4, die jeweils drei zueinander verschwenkbare Segmente 6 aufweisen. Die Segmente 6 bilden jeweils dem Vorformling zugewandte Kontaktflächen 7 mit nicht dargestellten Vakuumöffnungen. Obwohl in der Zeichnung nur jeweils drei Segmente 6 je Greifarm 4 dargestellt sind, ist für den Fachmann ersichtlich, dass die Anzahl der Segmente 6 nahezu beliebig sein kann.

Wie in den Figuren 3 und 4 dargestellt ist, umgreifen die Segmente 6 des Manipulators 3 jeweils den Vorformling 2 so, dass dieser über Vakuum an den Kontaktflächen 7 fixierbar ist. Die Konfiguration der Segmente 6 der Greifarme 4 in Figur 4 ist etwa der kreisringförmigen Kontur des schlauchförmige Vorformlings 2 angenähert, wobei für den Fachmann ersichtlich ist, dass die Annäherung an diese Kontur um so genauer ist, um so mehr Segmente 6 je Greifarm 4 Anwendung finden. Die Kontaktflächen 7 der Segmente 6 müssen nicht ebenflächig ausgebildet sein, vielmehr können diese entsprechend der Kontur des Vorformlings 2 konkav ausgebildet sein.

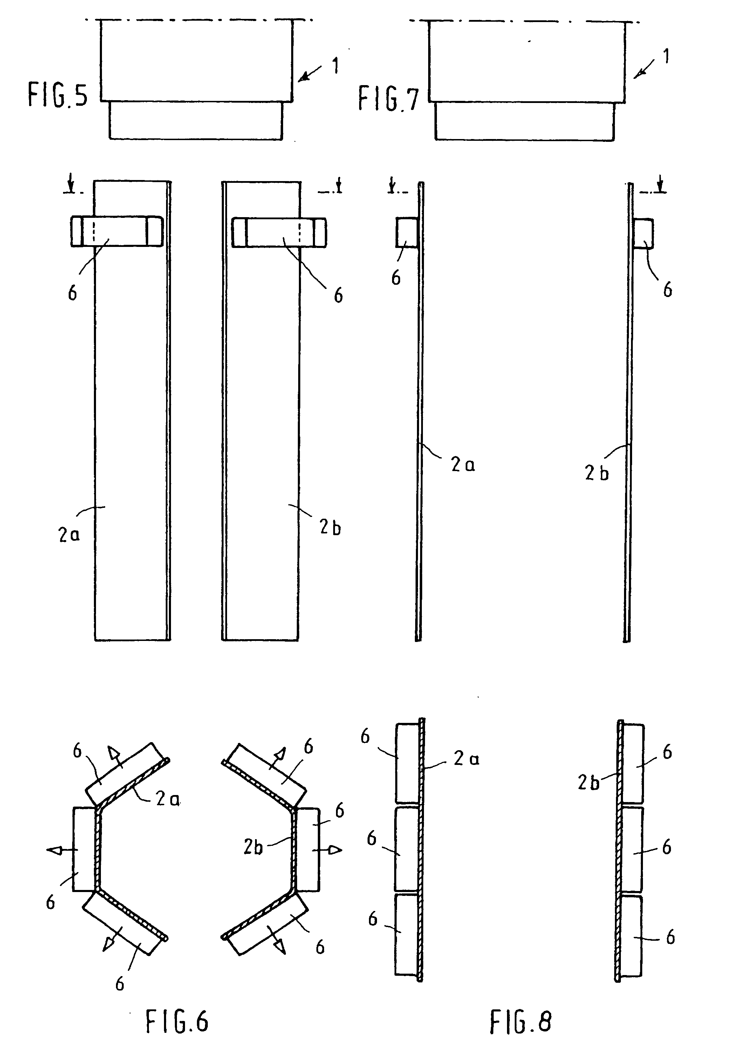

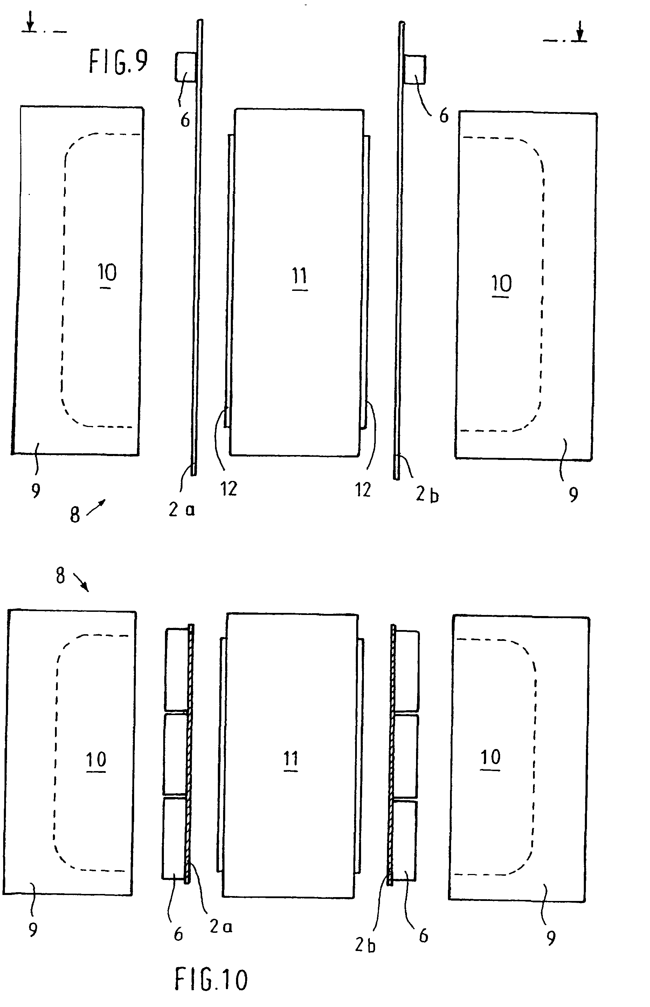

Wie in den Figuren 5 bis 8 veranschaulicht ist, ist erfindungsgemäß vorgesehen, dass die Segmente von einer in Figur 4 gezeigten Aufnahmestellung in eine in Figur 8 dargestellte Übergabestellung verstellt werden, wobei hierdurch eine Ausbreitung der den Segmenten 6 anhaftenden Materialbahnen 2a, 2b in noch plastischem Zustand erfolgt. Die von den Segmenten 6 des Manipulators 3 gehaltenen und ausgebreiteten Materialbahnen 2a, 2b, wie dies in den Figuren 7 und 8 dargestellt ist, werden dann von dem Manipulator 3 den in den Figuren 8 und 9 dargestellten Formwerkzeugen 8 zugeführt. Diese bestehen aus zwei Kavitätenformteilen 9 mit jeweils einer Kavität 10 und einem zentral angeordneten Deckelformteil 11, das jeweils auf seinem den Kavitäten 10 zugewandten Seiten mit einem der Kavität 10 entsprechenden Konturverlauf 12 versehen ist. Zur Umformung der Materialbahnen 2a, 2b schließen sich die beiden Kavitätenformteile 9 gegen das Deckelformteil 11, wobei jeweils ein Teil der Materialbahnen 2a, 2b durch den Konturverlauf 12 des Deckelformteils in die Kavität 10 gedrückt wird. Die vollständige Ausformung der Kavität 10 mittels des noch elastischen Kunststoffs erfolgt entweder über Evakuierung der Kavitäten 10 oder über durch das Deckelformteil 11 zugeführte Druckluft. Nach dem Schließen der Kavitätenformteile 9 kann der Manipulator 3 die Materialbahnen 2a, 2b freigeben.

Der Ablauf des erfindungsgemäßen Verfahrens ist wie folgt:

Zunächst wird, wie dies in den Figuren 1 und 3 dargestellt ist, der schlauchförmige Vorformling 2 hängend aus dem Extrusionskopf 1 in einer durch das Werkzeug vorgegebenen Länge ausgestoßen. Dabei kann unmittelbar unterhalb des Extrusionskopfs 1 der Vorformling 2 mit einer oder zwei Trennfugen 5 versehen worden sein. Die Trennfugen können bereits innerhalb des Extrusionskopfs 1 oder durch ein unterhalb desselben angeordnetes Werkzeug erzeugt worden sein. Nachdem der Vorformling 2 seine vorbestimmte Länge erreicht hat, umschließen die beiden Greifarme 4 des Manipulators 3 denselben, die mit Vakuumöffnungen versehenen Kontaktflächen 7 der Segmente 6 werden an die Oberfläche des Vorformlings 2 angelegt (siehe Fig. 4). Dabei wird das Vakuum wirksam, so dass die Materialbahnen 2a, 2b des Vorformlings 2 an den Kontaktflächen 7 haften.

Durch Wanddickensteuerung des Extrudats innerhalb des Extrusionskopfs 1 kann der Vorformling 2 zwischen den diesen umgreifenden Segmenten 6 und dem Extrusionskopf 1 mit einer umlaufenden Dünnstelle versehen worden sein.

In einem nächsten Schritt vollziehen die Greifarme 4 des Manipulators 3 eine Absenkbewegung oder Abwärtsbewegung, die der Extrusionsrichtung des Vorformlings 2 gleichgerichtet ist und die sich schneller als die Extrusionsgeschwindigkeit vollzieht. Hierdurch erfolgt ein Abreißen des Vorformlings 2 bzw. der Materialbahnen 2a, 2b an der vorher erzeugten Dünnstelle. Gleichzeitig mit dem Absenkvorgang oder nur geringfügig später kann die Ausbreitung der Materialbahnen 2a, 2b jeweils etwa in eine Ebene erfolgen. Hierzu werden die Segmente 6 in zueinander gestreckte Lage, d. h. in etwa fluchtende Anordnung zueinander bewegt. Wenn das Ablängen der Materialbahnen 2a, 2b von dem kontinuierlich extrudierten Strang durch das Absenken der Greifarme 4 eingeleitet wird, kann die Ausbreitung der Materialbahnen 2a, 2b gleichzeitig mit Einleiten des Absenkvorgangs oder nur geringfügig zeitversetzt das Ablängen bzw. Abreißen der Materialbahnen 2a, 2b unterstützen.

Wie dies beispielsweise in Fig. 2 andeutungsweise dargestellt ist, können an jedem Greifarm 4 jeweils drei Segmente 6 angeordnet sein. Das jeweils mittlere Segment 6 ist an dem Greifarm 4 angeschlagen. Die neben dem mittleren Segment 6 jeweils angeordneten Segmente 6 sind in Bezug auf das Mittelsegment gelenkbeweglich verschwenkbar.

Es ist nicht notwendigerweise erforderlich, die Materialbahnen 2a, 2b mittels des Manipulators 3 in eine Ebene auszubreiten. Es ist alternativ denkbar, je nach Anwendungsfall, dass die an den Greifarmen 4 angeordneten Segmente von einer etwa konkaven Aufnahmestellung in eine konvexe Übergabestellung bewegbar sind, in welcher die betreffende Materialbahn 2a, 2b an das Werkzeug übergeben wird.

Nachdem die Materialbahnen 2 a, 2b von dem Manipulator 3 ergriffen und in die in Figuren 9 und 10 dargestellte gestreckte Lage ausgebreitet wurden, erfolgt eine Positionierung derselben zwischen den Formwerkzeugen 8. Die Greifarme 4 können beispielsweise Teil eines in mehreren Achsen, vorzugsweise in sechs Achsen dreh- und/oder schwenkbaren Roboters sein. Mit den Greifarmen 4 lassen sich die Materialbahnen beispielsweise zu räumlich getrennt von dem Extrusionskopf 1 angeordneten Formwerkzeugen 8 verbringen.

Nachdem die Kavitätenformteile 9 und das Deckelformteil 11 geschlossen wurden, können die Materialbahnen 2a, 2b durch Nachlassen des Vakuums von dem Manipulator freigegeben werden und stehen zur Übernahme weiterer Materialbahnen zur Verfügung.

Erfindungsgemäß kann auch vorgesehen sein, die Materialbahnen 2a, 2b mittels des Manipulators 3 horizontal auszulegen und auf eine oberseitig geöffnete Tiefziehform auszubreiten, in die das Material dann auf bekannte Art und Weise mittels Vakuum eingezogen wird.

### Bezugszeichenliste

- 1: Extrusionskopf
- 2: Vorformling
- 2a, 2b: Materialbahnen
- 3: Manipulator
- 4: Greifarme
- 5: Trennfugen
- 6: Segmente
- 7: Kontaktflächen
- 8: Formwerkzeuge
- 9: Kavitätenformteil
- 10: Kavität
- 11: Deckelformteil
- 12: Konturverlauf

## Patentansprüche

1. Verfahren zur Herstellung von schalenförmigen Formteilen oder Hohlkörpern aus thermoplastischem Kunststoff, umfassend die Herstellung eines wenigstens annähernd schlauchförmigen Vorformlings (2) durch Extrusion (1) von thermoplastischem Material auf eine bestimmte Länge und die axiale Aufteilung des Vorformlings zu wenigstens einer einlagigen Materialbahn, wobei der Vorformling hängend extrudiert wird und wobei die Materialbahn in einem Formwerkzeug in der ersten Hitze die Endform erhält, **dadurch gekennzeichnet, dass** die Materialbahn mittels eines mit Greifarmen (4) versehenen Manipulators (3) ergriffen und von dem Extrusionskopf abgenommen wird, dass die Materialbahn mittels des Manipulators an diesem hängend quer zur Extrusionsrichtung ausgebreitet und/oder gestreckt wird und dass die Materialbahn von dem Manipulator dem Formwerkzeug (8) aufgegeben wird.

2. Verfahren nach Anspruch 1, wobei die Materialbahn mittels des Manipulators von dem Extrusionskopf abgerissen wird.

3. Verfahren nach einem der Ansprüche 1 oder 2, wobei durch Wanddickensteuerung bei der Extrusion des Vorformlings in vorgegebenen Abständen Soll-Risslinien durch Erzeugung von Dünnstellen über den Umfang des Vorformlings erzeugt werden.

4. Verfahren nach einem der Ansprüche 1 bis 3, wobei der Vorformling an wenigstens einer Stelle seines Umfangs mittels wenigstens eines unterhalb des Extrusionskopfes angeordneten Trennwerkzeugs axial aufgeteilt wird.

5. Verfahren nach einem der Ansprüche 1 bis 4, wobei der Vorformling an wenigstens einer Stelle seines Umfangs innerhalb des Extrusionskopfs axial aufgeteilt wird.

6. Verfahren nach Anspruch 5, wobei im Bereich der innerhalb des Extrusionskopfs vorgesehenen Trennfuge ein Trennmittel mit dem Vorformling extrudiert wird, welches vorzugsweise als thermoplastisches Material ausgebildet ist, das mit dem Material, aus welchem der Vorformling überwiegend besteht, nicht verschmelz- oder verschweißbar ist oder verklebt.

7. Verfahren nach einem der Ansprüche 1 bis 6, wobei die Coextrusion eines mehrschichtigen Vorformlings.

8. Verfahren nach einem der Ansprüche 1 bis 7, wobei die Wanddicke des Vorformlings über dessen Länge und/oder dessen Umfang variiert wird.

## Claims

1. A process for producing dish-shaped mouldings or hollow bodies of thermoplastic material, comprising producing an at least approximately tubular preform (2) by extrusion (1) of thermoplastic material to a given length and axially dividing the preform to form at least one single-layer web of material, wherein the preform is extruded in a hanging condition and wherein the web of material acquires the final form in a moulding tool in the first heat, **characterised in that** the web of material is gripped by means of a manipulator (3) provided with gripping arms (4) and removed from the extrusion head, that hanging from the manipulator the web of material is straightened and/or spread transversely with respect to the extrusion direction by means of the manipulator, and that the web of material is transferred by the manipulator to the moulding tool (8).

2. A process according to claim 1 wherein the web of material is torn away from the extrusion head by means of the manipulator.

3. A process according to one of claims 1 and 2 wherein desired-tear lines are produced by the production of thin locations over the periphery of the preform by wall thickness control upon extrusion of the preform at predetermined spacings.

4. A process according to one of claims 1 to 3 wherein at at least one location on its periphery the preform is axially divided by means of at least one severing tool arranged beneath the extrusion head.

5. A process according to one of claims 1 to 4 wherein the preform is axially divided at at least one location on its periphery within the extrusion head.

6. A process according to claim 5 wherein a separating agent is extruded with the preform in the region of the separating line produced within the extrusion head, the separating agent preferably being a thermoplastic material which is not fusible or weldable with or does not adhere to the material of which the preform predominantly consists

7. A process according to claims 1 to 6 wherein co-extrusion of a multi-layer preform is effected.

8. A process according to one of claims 1 to 6 wherein the wall thickness of the preform is varied over the length and/or the periphery thereof.

## Revendications

1. Procédé pour fabriquer des pièces moulées en forme de coquille ou des corps creux à partir de matière thermoplastique, comprenant la fabrication d'une préforme (2) au moins approximativement en forme de tuyau par extrusion (1) de matière thermoplastique sur une longueur définie et la répartition axiale de la préforme en une bande de matière au moins en une seule couche, sachant que la préforme est extrudée pendante et sachant que la bande de matière obtient la forme finale dans un moule lors du premier chauffage, **caractérisé en ce que** la bande de matière est saisie à l'aide d'un manipulateur (3) muni de bras de préhension (4) et retirée de la tête d'extrusion, que la bande de matière est élargie et/ou étirée pendante perpendiculairement à la direction d'extrusion, à l'aide du manipulateur, au niveau de celui-ci et **en ce que** la bande de matière est amenée au moule (8) par le manipulateur.

2. Procédé selon la revendication 1, selon lequel la bande de matière est rompue de la tête d'extrusion à l'aide du manipulateur.

3. Procédé selon l'une des revendications 1 ou 2, selon lequel, à l'occasion de l'extrusion de la préforme, de par le réglage de l'épaisseur de paroi, la création d'emplacements de faible épaisseur sur la périphérie de la préforme permet d'obtenir des lignes de fente théoriques espacées de façon prédéfinie.

4. Procédé selon l'une quelconque des revendications 1 à 3, selon lequel la préforme est répartie axialement au niveau au moins d'un emplacement de sa périphérie au moyen au moins d'un outil de séparation disposé en dessous de la tête d'extrusion.

5. Procédé selon l'une quelconque des revendications 1 à 4, selon lequel la préforme est répartie axialement au niveau au moins d'un emplacement de sa périphérie au sein de la tête d'extrusion.

6. Procédé selon la revendication 5, selon lequel dans la zone de la ligne de joint prévue au sein de la tête d'extrusion, un agent de séparation, conçu de préférence en tant que matière thermoplastique n'adhérant pas ou ne pouvant fondre ou être soudée avec la matière composant principalement la préforme, est extrudé avec la préforme.

7. Procédé selon l'une quelconque des revendications 1 à 6, selon lequel on fabrique une préforme à plusieurs couches par coextrusion.

8. Procédé selon l'une quelconque des revendications 1 à 7, selon lequel l'épaisseur de paroi de la préforme varie sur sa longueur et/ou sa périphérie.
